# NEW EUROPEAN PATENT SPECIFICATION

(11) **EP 2 350 178 B2**
(45) Date of publication and mention of the opposition decision: **23.04.2025**
(45) Mention of the grant of the patent: 28.11.2018
(21) Application number: 09775134.1
(22) Date of filing: 24.11.2009
(51) Int. Cl.: C08J 9/00

(54) **METHOD FOR PRODUCING A FLAME RETARDANT FOAM FORMING COMPOSITION**
VERFAHREN ZUR HERSTELLUNG EINER EINEN FLAMMWIDRIGEN SCHAUM BILDENDEN ZUSAMMENSETZUNG
PROCÉDÉ DE FABRICATION D'UNE COMPOSITION FORMANT UNE MOUSSE IGNIFUGE

(30) Priority: 24.11.2008 EP 08169803
(43) Date of publication of application: 03.08.2011
(73) Proprietor: Soudal, 2300 Turnhout (BE)
(72) Inventor: DIRCKX, Veerle, B-3270 Scherpenheuvel (BE); GEBOES, Peter, B-2630 Aartselaar (BE)
(74) Representative: Gevers Patents
(86) International application number: PCT/EP2009/065783
(87) International publication number: WO 2010/058036

(56) References cited:
- EP-A1- 0 716 109
- DE-A1- 19 926 312
- US-A- 5 070 114
- US-A- 5 834 529
- US-A1- 2004 122 119
- US-B2- 6 752 292
- BAYER: "Raw Materials for High Performance Adhesives", 1 January 2014 (2014-01-01), pages 1 - 20, XP055379767, Retrieved from the Internet <URL:http://www.adhesives.covestro.com/~/media/Product%20Center/ADH/Documents/Brochures%20NAFTA/AdhesiveRawMtlBook_4-2014.ashx> [retrieved on 20170608]

## Description

The present invention relates to a method for producing a one component foam forming composition which contains at least one organic prepolymer composition for producing a fire retardant foam upon extrusion of the foam forming composition from a pressurized container, as defined in the first claim.

### BACKGROUND OF THE INVENTION.

Nowadays polymer foams, such as polyurethane foams, know widespread uses, their use in building applications being particularly pronounced. Because of their ease of application and efficiency, one component polyurethane foams contained in pressurised aerosol containers find widespread uses in building applications, for example as a filler material upon mounting of windows or doors in buildings, filler material for empty volumes or wall breakthroughs for pipe installation. In these applications, the fire or flame retardant properties of the foams have gained increasing importance and the foams now may have to meet standard levels set by official authorities.

In traditional one component aerosol PU foams, fire retardant properties are ensured by the presence of different ingredients such as halogens, in particular bromine and chlorine containing polyols and plasticizers; liquid phosphor containing ingredients, for example phosphates, phosphonates, polyols, including halogenated types; aromatic isocyanates, such as MDI and TDI and polyester polyols which show better fire resistant properties than polyether polyols. In this latter group the aromatic polyester polyols are better performing then the aliphatic types. On top, in foams with higher amounts of closed cells the usage of fluorinated hydrocarbons as propellant results in better fire retardant properties compared to propane/ butane / DME containing formulations. It is noteworthy that all these ingredients are liquids. The use of solid ingredients in such a foam forming composition results in separation and settling in the can of these solids in the relatively low viscous mixture of isocyanates, polyols, plasticizers and propellants.

More recently developed foams however (e.g. those based on aliphatic isocyanates, low monomeric isocyanate, low monomeric isocyanate polymers, silane terminated polymers, ....) contain significantly smaller amounts of aromatic isocyanates. Since these formulations contain less isocyanates, they are 'softer' than the traditional foams and the production of the foam forming formulation, the use of plasticizers which often are a good source of halogens or phosphor, is less evident. The combination of the reduced isocyanate and fire retardant plasticizer content in the formulation results therein that the required fire retardant properties are much more difficult to achieve when compared with formulations produced from the conventionally used ingredients.

One component foaming compositions usually contain a prepolymer, a propellant mixture and additives and they are often contained in disposable pressurized aerosol cans. The foam is formed upon dispensing of the prepolymer from the can. The prepolymer hardens upon contact with the air humidity.

### PRIOR ART DESCRIPTION.

US2004/0122119 discloses a method for the manufacture of a two component fire resistant polyurethane and/or polyisocyanurate foam comprising introducing expandable graphite particles to the screw of an extruder and using the screw of the extruder to mix the expandable graphite with a dispersion of the isocyanate or a dispersion of the polyol. The isocyanate and the polyol are introduced into the screw as separate formulations which are then caused to react. The screw ensures homogeneous mixing of the isocyanate and polyol reactants and ensures that a homogeneous distribution of the expandable graphite over the foam forming composition is achieved. US2004/0122119 discloses a two component foam formulation which is preferably caused to react in an extruder screw, immediately prior to producing the foam. Alternatively dispersions of graphite in a polyol or in an isocyanate may be produced in an extruder, followed by mixing the remaining components in a conventional batch mixing or high pressure spraying process to produce the foam. US2004/0122119 does not use any prepolymer, nor is it concerned with the stability over time and/or the shelf life of graphite dispersions in pressurized cans.

EP0716109A1 discloses a pressurized, blowing agent-containing semi-prepolymer mixture. Said mixture is prepared by blending the reactants and the blowing agent and introduced in a pressurized container in one or several steps and shaken, to produce a single-component PU foam. Expandable graphite can be incorporated as flame retardant. EP0716109A1 does not use a prepolymer which has an isocyanate monomer content of less than 3 wt. %.

DE19926312A1 discloses a one component polyurethane foam forming composition in a pressurized aerosol can, comprising a propellant mixture, an isocyanate prepolymer, and from 2 to 50 wt.%, preferably from 5 to 15 wt.% of a flame retardant such as expandable graphite, wherein the isocyanate prepolymer may be formed within the aerosol can, or before being supplied to the aerosol can. DE19926312A1 does not disclose the use of a prepolymer which has an isocyanate monomer content of less than 3 wt. %.

US-A-5.834.529 discloses a pressurized isocyanate semi-prepolymer mixture with an isocyanate content of from 5 to 25 %, which contains a blowing agent. The prepolymer mixture has a low viscosity, is free flowing and can be obtained by reacting hydroxyl-containing alkoxylated lignin or mixtures of such lignins and lignin-free polyhydroxyl compounds, with organic polyisocyanates, in a reaction vessel in the presence of at least one blowing agent, or by subsequently treating the isocyanate semiprepolymers formed without blowing agent with at least one blowing agent. If required, the pressure containers can be treated in a tumbling or shaking apparatus to intensively mix the isocyanate semi-prepolymers and blowing agents. US-A-5.834.529 solves the problem of providing a prepolymer which is made of lignin containing compounds as a novel starting materials, to enable the production of poly isocyanate poly addition products having different mechanical properties and to open up new possible uses. Lignin is considered as an important waste material which is unavoidably obtained as byproduct in the production of cellulose or paper pulp from wood. The prepolymer may contain 5-50 parts of graphite in the expanded form, as a flame retardant, for every 100 parts by weight of the isocyanate semiprepolymer mixture.

The pressurized lignin isocyanate semiprepolymer mixtures can be prepared by known methods. According to one process variant, the polyhydroxyl compound is reacted with the polyisocyanate, to give the isocyanate prepolymer. The prepolymer is mixed with further additives, introduced into a pressure container and the blowing agent is added. According to another process variant, the isocyanate prepolymer preparation is carried out in the presence of blowing agents in a suitable pressure container. The isocyanate semi prepolymer mixture obtained can then be packed in suitable aerosol cans.

The pressurized isocyanate semi-prepolymer mixture disclosed in US-A-5.834.529 contains already expanded graphite. Expanded graphite is a fine powder which separates from the remainder of the content of the can involving coagulation and formation of lumps of expanded graphite of a particle size which is too large to permit extrusion from the nozzle of the can. This will lead to blocked valves, inhomogeneous can content and uneven distribution of foam properties. US-A-5.834.529 does not disclose whether or not the particle size of the graphite or the viscosity of the prepolymer would be of any importance for the properties of the expelled foamed end product.

According to the teaching of DE19619421 anti-flame agents for one and two component foam aerosol systems should be miscible and chemically compatible with the remainder of the content of the can and they should be sprayable. With respect to sprayability this means that the flame retardants should be liquid and have a viscosity that is adapted to the viscosity of the liquid contained in the aerosol can, and that they should not undergo gelation.

WO2004/092259 discloses that the use of solid flame retardants in one component foamable mixtures in aerosol cans is not appropriate, due to coagulation of the solid particles and/or blocking of valves.

US-B2-6.752.292 discloses a cartridge set for the in-situ dispensing of a two-component foam, with a high viscosity polyol contained in one cartridge and a high viscosity isocyanate contained in the other cartridge. Expandable graphite is contained in one or both of the cartridges. Both cartridges open into a common elongated extremely fine mixing nozzle. A fine distribution of the graphite over the foam produced may be obtained because in the mixing nozzle two highly viscous components and the expandable graphite are mixed using a static mixer, and the mixing nozzle has a length/width ratio of 10-20. The nozzle has a diameter of 2-5 mm, which permits using graphite particles of 0.1-0.3 mm length. Optimum amounts of graphite vary from 10-20 %.

The prepolymer foam forming composition used in one component foams however has a viscosity which is significantly lower than that of the components of a two component formulation. As a result, homogeneous dispersion of expandable graphite in the one component foam forming composition, which moreover shows sufficient stability upon storage for a longer period of time to permit producing a foam with homogeneous properties, cannot be achieved. The non-homogeneous distribution of the graphite in the foam forming composition will inevitably result in a non-homogenous distribution of graphite in the expelled foam, resulting in varying in foam properties. There is thus a need to a one component foam forming composition which permits obtaining a homogeneous distribution of graphite in the expelled foam.

### DESCRIPTION OF THE INVENTION.

The present invention aims at providing a process for producing a one component foam forming composition which shows good fire proof and fire retardant properties even in the absence of the conventional halogen based plasticizers and fluorine containing propellants, in the foam forming composition, even at low residual monomeric isocyanate content.

The problem of providing a process for producing a foam forming composition, which shows good fire proof and fire retardant properties even in the absence of the conventional halogen based plasticizers and fluorine containing propellants is solved with a process showing the technical features of the characterizing portion of the first claim.

Thereto, the process of the present invention is characterized in that
- the prepolymer composition and from 0.5-30 wt.% expandable graphite with respect to the weight of the prepolymer are supplied to the container,
- the container is sealed and pressurized by injection of at least part of the pressurized propellant into the closed container and
- the contents of the container are subjected to motion to cause mixing of the prepolymer, the expandable graphite and the propellant
- wherein the prepolymer composition is at least partially prepolymerised when the expandable graphite is added and the prepolymer has an isocyanate monomer content of less than 3 wt.% with respect to the total weight of the prepolymer.
The propellant may be added either in one go, or in two or more portions. The propellant may be a single propellant but a mixture of two or more propellants may suitably be used as well.

Within the scope of this invention prepolymer composition refers to a composition which contains the organic prepolymer and the usual additives and filler materials, except for the propellant which is considered as a separate component. Upon extrusion the prepolymer expands and hardens upon contact with air humidity.

To achieve optimum mixing of the expandable graphite and the prepolymer composition, the prepolymer composition preferably has a viscosity of at least 40.000 mPa.s at 20°C, more preferably at least 60.000, most preferably at least 75.000.

Usually the prepolymer composition will have a viscosity of below 1.500.000, preferably below 1.250.000, more preferably below 900.000 mPa.s at 20°C.

The prepolymer composition and expandable graphite may either be supplied to the aerosol container as a mixture or the prepolymer composition and expandable graphite may be supplied as separate components which are mixed in situ in the container.

Traditionally, one component foam forming formulations for aerosol applications of polyol - isocyanate based prepolymers are produced in-situ in the container in which they are to be stored and from which they are to be expelled to form the foam. Thereto, the components for the prepolymer, in particular the polyols, the isocyanates, the usual additives and propellants are supplied to an aerosol can, homogenised therein and the polymerisation process to form the prepolymer is allowed to take place in the can. In the course of prepolymerisation the viscosity of the mixture in the can slowly increases during the first 24 hours, from ca. 500 mPa.s at 20°C, up to a 10 or even 1000-fold higher viscosity. Because the prepolymerisation is an exothermic reaction, the prepolymer resulting from the prepolymerisation has a relatively higher temperature and a relatively lower viscosity when compared to the viscosity of the components that are caused to react at room temperature.

When analyzing the problems occurring with one component polymer foams obtained from a prepolymer composition produced according to the traditional in-situ production process described in the previous paragraph, the inventors have observed that addition of solids to the mixture of the reactants that should form the prepolymer , usually leads to separation and settling of the solids in a lower region of the can and often even to coagulation of the solids into lumps. This is attributed to the low initial viscosity of the mixture. Homogenizing of the lumps with the low viscosity liquid mixture in the can is hard to achieve : the can does not contain a mixing tool and simple shaking of the aerosol can has been found incapable of solving the problem. The solid in-homogeneities risk to block the valve of the can upon extrusion of the foam, which hampers extrusion of the content of the can. Often the lumps stay behind in the can whilst extruding the foam, leading to different foam properties than what the system was designed for. For conventional one or two component aerosol foams solids are therefore not used.

The inventors have now observed that by adding expandable graphite to preformed polymer; after an at least partial prepolymerisation of the raw materials which form the prepolymer has been achieved, a dispersion of graphite in the prepolymer can be obtained which is sufficiently uniform and stable in time. An at least partially prepolymerised formulation or an at least partially preformed polymer, has a much higher viscosity than the foam forming formulation prior to prepolymerisation and this facilitates homogenization of expandable graphite within the preformed polymer. The inventors have observed that although subsequent addition of propellant causes the viscosity of the preformed polymer and the prepolymer composition to decrease, this does not adversely affect the fire retardant properties of the foam forming composition. The inventors have namely observed that manual shaking of the container with contents prepared as described above, is sufficient to achieve or restore a sufficiently homogeneous dispersion of the expandable graphite in the foam forming composition upon extrusion of the foam. Moreover, even if separation of the expandable graphite would take place in the aerosol can, the layered structure of the expandable graphite ensures that any stacking of solid particles occurring in the can is loose, so that re-homogenising of the contents of the aerosol can, can easily be achieved by simple shaking of the can, provided the expandable graphite is added to the preformed polymer, i.e. the prepolymer composition. It has been found that often manual shaking is sufficient to obtain a mixture which upon extrusion produces a foam in which the expandable graphite is sufficiently homogeneously distributed.

Within the scope of the method of this invention, after addition of the graphite and propellant, the sealed container may either be shaken to such an extent that a virtually homogeneous mixing of all components is achieved, but this is not mandatory and a mixing to a lesser extent will be sufficient as well. Homogenous mixing is not necessarily required as it is of common use to shake the sealed can before use to produce the foam. The inventors have found that the viscosity of the formulation contained in the can is sufficiently low to permit achieving good re-distribution of the expandable graphite in the prepolymer composition mixture.

The inventors have observed that with the foam forming composition obtained according to the method of this invention, the expandable graphite is distributed sufficiently homogeneous in the foam that is extruded from the container, over the whole shelf life time of the aerosol can. When expelled from the container the expandable graphite has been found capable of expounding upon exposure to fire or high temperature.

The inventors have further found that the present invention permits achieving a foam with the required fire retardant properties, even when using very low or even no halogen containing compounds. In prior art compositions, fire retardant properties were induced by the presence of predetermined amounts of halogen, in particular chlorine or bromine containing ingredients. The reduction or absence of such ingredients is important as actual environmental law seeks to reduce the use of halogen containing compounds a.o. in foams. The presence of expandable graphite however does not exclude incorporation of halogen containing plasticisers into the foam forming composition.

Within the scope of the present invention, expandable graphite means a graphite composition of plate-like graphite particles having a layered structure and a mean particle size of below 3000 micron, preferably below 500 micron, most preferably below 300 micron. The amount of expandable graphite incorporated in the aerosol can, may be determined by the skilled person taking into account the properties of the foam and the volatility of the matrix. This way, graphite concentrations may vary from 0.5 - 30 wt. %, preferably 3-20 wt. %, more preferably 7-15 wt. % with respect to the weight of the prepolymer. Similarly, the amount of propellant incorporated in the aerosol can, may be determined by the skilled person taking into account the nature of the formulation contained in the can.

Expandable fire retardant graphite is manufactured by oxidation of graphite in e.g. sulfuric acid. After the intercalation has been established by insertion of an intercalating compound between the layers of the layered oxidized graphite structure, the graphite is neutralized, washed and dried. Expandable graphite with fire retardant properties is for example available from Nyacol US, UCAR Graph-Tech Inc., ... Oxidized graphite is capable of expanding up to 300 times its original size when heated. The expansion degree depends upon the size of the flakes, the purity of the graphite and the nature and concentration of the intercalating compound.

In the present invention, the use of expandable graphite with a pH of between 5 and 9, preferably between 6 and 8, preferably a neutral pH of about 7, is preferred.

The above described technology permits to formulate a pressurized aerosol can with a prepolymer with improved fireproof properties. This is particularly important in case of NCO or silane terminated organic prepolymers, which may be formulated in such a way that the fire retardant properties of the foam respond to the criteria of class B2 and B1 norm according to DIN4102 or class D and E, as well as class B and C according to EN 13501-1, even at negligible halogen and/or monomeric isocyanate content. Conventional prepolymers contain up to 10 or even 20 wt. % of non-reacted monomer isocyanate which adds to the fireproof properties.

This technology also permits to provide pressurized aerosol cans with a GWP value of below 150, which is required by EC 842/2006 regulation since 5-7-2008 and is particularly important to, but not limited to NCO or silane terminated organic prepolymer compositions. This regulation restricts the use of fluorine containing propellants, which play an essential role in the fire retardant properties of one component foams.

The method of the present invention is particularly suitable for use with organic prepolymer compositions which contain a NCO or silane terminated prepolymer. The foam forming composition of this invention may contain a mixture of several prepolymers but will usulally contain one single type of prepolymer.

The NCO terminated prepolymer can be formed via the chemical reaction of any type of poly- or mono-hydroxyl compound or a mixture of two or more of them with any type of isocyanate compound in the appropriate mixing ratio. For the purpose of producing one component aerosol foam forming compositions these poly- or mono-hydroxyl compounds are mainly polyether alcohols or polyester alcohols, which may have widely varying molecular weights and/or functionality. The isocyanates may be aliphatic or aromatic isocyanates or a mixture of two or more different isocyanates.

Suitable isocyanates for use in the present invention include polyisocyanates, in particular aliphatic, cyclo-aliphatic, arylaliphatic, aromatic poly-isocyanates. Particularly preferred are the common industrially available di- and/or poly isocyanates, which may contain urethane groups. Examples of industrially available isocyanates are those produced for example by BAYER, BASF/ELASTOGRAN, HUNTSMAN, DOW, ONGRO, etc. made available under tradenames like respectively Desmodur, Lupranate, Suprasec, Voranate, Ongronate, isophorondiisocyanate (IPDI), toluene diisocyanate (TDI), 1,5-diisocyanatonaphthalene (NDI), tri-iso-cyanatotrimethylmethane, 1,6-di-isocyanatohexane (HDI), and 2, 4 or 4, 4'-diisocyanatodiphenylmethane (MDI). The isocyanates, their isomers or derivatives (e.g. biurete and allophanate adducts) can be used as such or as a mixture of two or more compounds. Especially preferred are the aromatic diisocyanates 4,4'-, 2,4'- and 2,2'-diphenylmethane diisocyanates, polymethylene polyphenyl isocyanates, mixtures of 4,4'-, 2,4'- and 2,2'-diphenylmethane diisocyanates and polymethylene polyphenyl isocyanates (Polymeric MDI, PMDI), and mixtures thereof. The isocyanates may be modified as would be readily understood by those skilled in the field of polyurethane foam chemistry, as long as the selected isocyanates are capable of reacting hydroxylcompounds to a urethane.

Suitable hydroxyl compounds for use in the present invention are polyether or polyester alcohols or a mixture of two or more of those which contain functional hydroxyl groups, known for the production of polyurethane elastomeric adhesives and sealants, rigid, semi-rigid, flexible and froth foams. The polyether/polyester polyols may also contain amine groups. Suitable polyols for use with the present invention have an average molecular weight of 100 to 4500 and a functionality of from 2 to 4, preferably from 2 to 3. Within the scope of this invention, it is possible to use one single type of hydroxyl compound or a mixture of two or more different hydroxyl compounds.

The silane terminated polymer can be formed via a two-step or one-step reaction process. In the two-step process, first an isocyanate terminated polymer is formed via reaction of the poly- or mono-hydroxyl compound described above, with any type of isocyanate compound in the appropriate mixing ratio, and thereafter the NCO-groups of the thus obtained polymer are caused to react with aminosilane compounds. Particulary suitable for this reaction are the so called alpha-alkoxy amino silanes, where the alkoxy group is in alpha position with respect to the organo-functional group and which are very reactive towards water. In the one-step process, a hydroxyl compound or a mixture of two or more different hydroxyl compounds is caused to react with an isocyanato-alkoxysilane. Particularly suitable for this reaction are the so called alphasilanes, such as those described below.

The OH-reactive organo-functional group is preferably a -NCO group.

NCO-reactive silane components usually respond to the general formula X-(CH₂)ₙ-SiR³_{z}(OR⁴)_{3-z} in which R³ represents an alkyl, cycloalkyl, alkenyl or aryl group comprising 1-10 carbon atoms, R⁴ represents an alkyl group comprising 1-2 carbon atoms or an ω-oxaalkyl alkyl group comprising 2-10 carbon atoms in total and z is 0 or 1, n = 1, 2 or 3 and X represents the OH or NCO reactive group. Most preferred are those compounds in which R⁴ e is a methyl group and z is 0 or 1, thus dimethoxy and trimethoxy terminated silane compounds. The NCO-reactive group X contains an active hydrogen atom, such as an -NH₂, -NH, -SH, epoxy or -OH group. Most preferred is the alkoxy in alpha position with respect to the organo-functional group, implying that n=1. A particularly suitable NCO reactive alpha-silane is (N-Phenylaminomethyl) dimethoxysilane.

The OH-reactive silane components have the general formula X-(CH₂)ₙ-SiR³_{z} (OR⁴)_{3-z} where the silane termination is as described in the previous paragraph. The OH-reactive organo-functional group may be a -NCO group. Most preferred is the alpha positioning of the organo-functional group with respect to the alkoxy group, implying that n=1.

According to the method of this invention, any polymer or polymer mixture with a viscosity that is higher than 40 000 mPa.s at 20°C can be compounded with expandable graphite, additives and propellants in a pressurised aerosol can to generate a polymeric foam with fire retardant properties. Particularly interesting are prepolymers with an isocyanate monomer content of less than 3 wt. % with respect to the total weight of the prepolymer, and foam formulations in a pressurised aerosol can based on these prepolymers with an isocyanate monomer content of less than 1 wt.% with respect to the total weight of the foam formulation.

The prepolymer composition based on a NCO or silane terminated prepolymer will further contain an amount of a catalyst, to accelerate the reaction of the compounds in the stage of prepolymer formation and to accelerate the moisture curing reaction after the reaction mixture is expelled out of the can. For the urethane formation and the moisture curing reaction of the NCO-terminated urethane polymer mainly amine catalysts are used. The amine catalyst may comprise a primary, secondary or tertiary amine, with tertiary amine catalysts being particularly preferred.

Examples of suitable catalysts for the urethane formation include dimethylethanol amine (DMEA), tetramethyliminobispropyl amine (Polycat 15), N,N-dimethylcyclohexyl amine (DMCHA), tetraethylenediamine (Dabco/TEDA), etc. Most preferably, the amine catalyst is a dimorpholine compound such as dimorpholinopolyethylene glycol (PC Cat 1 KSC), 2,2'-dimorpholinodiethylether (DMDEE), with 2,2'-dimorpholinodiethylether being particularly preferred. The dimorpholino catalysts are preferably present in the compound of the present invention in an amount of from 0.1 to 3 parts by weight, and most preferably 0.4 to 1 parts by weight. If so desired, organometallic compounds such as tin mercaptide, dibuyltin dilaurate (DBTDL) may be used.

The moisture curing reaction of the silane end capped prepolymers may be acid, alkaline or metal catalysed. Suitable catalysts are e.g. butylphosphate, benzoylchloride, tincompounds, ironcompounds, amines,...

The prepolymer composition of this invention will preferably also comprise an amount of at least one surfactant and/or cell opener, to provide stability to the foam's cell structure during dispensing, curing and post-expansion processes, which occur as a result of CO₂ generated by the reaction of the free isocyanate with atmospheric moisture, and/or the expansion of the propellants. The surfactants assist in the control of the open cell to closed cell ratio that, in turn, provide dimensional stability and affect the foaming pressure of the final cured foam. Examples of commercially available polysiloxane polyoxyalkylene surfactants suitable for use in the present invention include those typically used in polyurethane (rigid, flexible semi-rigid) foam applications such as those supplied by AIR PRODUCTS, GOLDSCHMIDT, SCHILL & SEILACHER, BYK CHEMIE, GE SILICONES, etc. The surfactants are present in the composition mixture of the present invention in an amount of 0.1 to 4.0 parts by weigth.

Non reactive components can also be added to the prepolymer composition to control the viscosity of the polymer mixture or to modify the hardness of the final foam (plasticisers). These are e.g. liquid phosphates (e.g. TCPP, kresylphosphate,...), liquid phosphonates (e.g. TEP), chlorinated paraffines or other commonly used liquid flame retardants or viscosity reducers (phtalates, mesamoll, ...)

Finally, all ingredients of the prepolymer composition, including but not limited to the prepolymer, the catalyst, surfactants and plasticizers and possible other additives, are added to the aerosol container either separately or as a premix. The expandable graphite may also be added separately or as a premix with one or more components of the prepolymer composition, and is added after the prepolymer is formed. After addition of all ingredients has been completed, the aerosol container is closed, and propellants are added. Usually thereafter the contents of the can will be homogenized via shaking.

The following examples illustrate the present invention:

### Comparative example 1.

A one component foam forming formulation in an aerosol can is produced via the 'conventional' in situ production process. Therefore 333 g of polymeric MDI (methyldiphenyldiisocyanate) and 280 g of a polyol blend are added in an aerosol can. 100 g of the polyol blend consists of 35 g of TCPP (trichloroisopropyl phosphate), 5 g of silicon stabiliser/ celopener, 1 g of DMDEE (dimorfolino diethylether), 52 g of Voranol CP1055, 7 g Daltolac R252. The can is sealed with a valve and 130 g of a propellant (propane-butane-dimethylether) is added. The content of the can is homogenized via shaking.

### Comparative example 2.

A one component foam forming formulation in an aerosol can is produced via the 'conventional' in situ production process. Therefore 333 g of polymeric MDI (methyldiphenyldiisocyanate) and 280 g of a polyol blend are added in an aerosol can. 100 g of the polyol blend consists of 35 g of TCPP (trichloroisopropyl phosphate), 5 g of silicon stabiliser/ celopener, 1 g of DMDEE (dimorfolino diethylether), 52 g of Voranol CP1055, 7 g Daltolac R252. 50 g of expandable graphite is added on top of the thus obtained mixture, before formation of the prepolymer could take place. The can is sealed with a valve and 130 grams propellants (propane-butane-dimethylether) are added. The can is homogenized via shaking.

### Comparative example 3.

613 g of an NCO-terminated prepolymer is formed by reacting 333 g of MDI (methyldiphenyldiisocyanate) and 280 g of a polyolblend. 100 g of the polyol blend consist of 35 g of TCPP, 5 g of silicon stabiliser/celopener, 1 g of DMDEE, 52 g of Voranol CP1055, 7 g of Daltolac R252). 613 g of the NCO-terminated polymer are added in an aerosol can. 50 g of expandable graphite are added on top of the thus obtained mixture. The can is sealed with a valve and 130 g propellants (propane-butane-dimethylether) are added. The can is homogenised via shaking.

### Comparative example 4.

A silane terminated prepolymer is formed by reacting 88.3 g TDI with 110.5 g Voranol P400 under controlled conditions in a reactor. The NCO-terminated polymer is endcapped by consecutive reaction with 107.5 g N-phenylmethyldimethoxysilane (100% conversion of NCO-groups). 17 g VTMO (vinyltrimethoxysilane) and 10 g foam stabilisator (organosiliconcompound) are added and homogenised. The prepolymer (viscosity = 20 000 cP at20°C) is dosed into an aerosol container. The can is sealed with a valve and 102 g propellants (propane-butane-dimethylether) are added. The can is homogenised via shaking.

### Comparative example 5.

A silane terminated prepolymer is formed by reacting 88.3 g TDI with 110.5 g Voranol P400 in 2:1 ratio under controlled conditions in a reactor. The NCO-terminated polymer is endcapped by consecutive reaction with 107.5 g N-phenylmethyldimethoxysilane. 17 g VTMO (vinyltrimethoxysilane) and 10 g foam stabilisator (organosilicon compound) are added and homogenised. The prepolymer (viscosity = 20 000 cP at20°C) is dosed into an aerosol container. 13 w/w% expandable graphite is added on top. The can is sealed with a valve and 102 g propellants (propane-butane-dimethylether) are added. The can is homogenised via shaking.

### Example 6.

500 g of the low monomeric NCO terminated prepolymer Desmodur VP LS 2397 (viscosity 10 000 mPa.s. at 50°C) is added in an aerosol container, 15 g foam stabilisator (organosilicon compound), 5 g DMDEE are added on top. The can is sealed with a valve and 95 g propellants (propane-butane-dimethylether) are added. The can is homogenised via shaking.

### Example 7.

500 g of the low monomeric NCO terminated prepolymer Desmodur VP LS 2397 is added in an aerosol container, 15 g foam stabilisator (organosilicon compound), 5 g DMDEE and 70 g expandable graphite are added on top. The can is sealed with a valve and 95 g propellants (propane-butane-dimethylether) are added. The can is homogenised via shaking.

### Comparative example 8.

A silane terminated prepolymer is formed by reacting 88.3 g TDI with 110.5 g Voranol P400 in 2:1 ratio under controlled conditions in a reactor. The NCO-terminated polymer is endcapped by consecutive reaction with 107.5 g N-phenylmethyldimethoxysilane. 17 g VTMO (vinyltrimethoxysilane) and 10 g foam stabilisator (organosilicon compound) are added to the thus obtained polymer and the mixture is homogenised. The thus obtained prepolymer (viscosity = 20 000 cP at20°C) is dosed into an aerosol container. 13 w/w% expanded graphite (Trademark "Sigraflex" from the company SGL Carbon) is added on top. The can is sealed with a valve and 102 g propellants (propane-butane-dimethylether) are added. The contents of the can are homogenised by subjecting the can to shaking.

**Table 1: test results of the extruded foams for the DIN 4102, part 1.**

| | B2-test result | Remark |
|---|---|---|
| Example 1 | Negative | Homogeneous aerosol content in the can |
| Example 2 | Negative | Non- homogeneous aerosol content in the can. Graphite forms a solid layer at the bottom of the can. Re-homogenising of the contents of the can cannot be achieved by shaking. |
| Example 3 | Positive | Homogeneous aerosol content in the can. NCO terminated polyurethane prepolymer, foam formulation is halogen free. Efficient flame retardant properties. |
| Example 4 | Negative | Homogeneous aerosol content in the can. |
| Example 5 | Positive | Homogeneous aerosol content in the can. Silane terminated prepolymer, foam formulation is halogen free. Efficient flame retardant properties. |
| Example 6 | Negative | Homogeneous aerosol content in the can. |
| Example 7 | Positive | Homogeneous aerosol content in the can. Low monomeric isocyanate prepolymer, foam formulation is halogen free. Efficient flame retardant properties. |
| Example 8 | Negative | Homogeneous aerosol content. Expanded graphite does not reveal the intumescent behavior of expandable graphite. Efficient flame retardancy is not obtained. |

## Claims

1. A method for producing a one component foam forming composition which contains at least one organic prepolymer composition for producing a fire retardant foam upon extrusion of the foam forming composition from a pressurized container, **characterized in that** the prepolymer composition and from 0.5 - 30 wt. % expandable graphite with respect to the weight of the prepolymer are supplied to the container, after which the container is sealed and pressurized by injection of at least part of the pressurized propellant into the closed container and the contents of the container are subjected to motion to cause mixing of the prepolymer composition, the expandable graphite and the propellant, wherein the prepolymer composition is at least partially prepolymerised when the expandable graphite is added and wherein the organic prepolymer composition contains a prepolymer which is a NCO or silane terminated prepolymer and wherein the prepolymer has an isocyanate monomer content of less than 3 wt.% with respect to the total weight of the prepolymer.

2. A method as claimed in claim 1, **characterized in that** the prepolymer composition and the expandable graphite are supplied to the container as a premix.

3. A method as claimed in claim 1, **characterized in that** the prepolymer composition and the expandable graphite are supplied as separate components to the container and mixed in situ in the container.

4. A method as claimed in claim 1, **characterized in that** the silane terminated prepolymer is produced by reaction of a NCO terminated prepolymer with an aminosilane, preferably an alpha alkoxy aminosilane.

5. A method as claimed in claim 1, **characterized in that** the silane terminated prepolymer is produced in a one-step process by reaction of a compound with functional OH groups selected from the group of a polyether polyol, a polyester polyol or a mixture thereof, wherein at least part of the functional OH groups of the main chain react with an isocyanato-alkoxysilane, preferably an alpha alkoxy silane.

6. A method as claimed in claim 4 or 5, **characterized in that** as an alkoxysilane, use is made of a silane which responds to the general formula X-(CH₂)ₙ-SiR³_{z}(OR⁴)_{3-z} in which
- R₃ represents an alkyl, cycloalkyl, alkenyl or aryl group comprising 1-10 carbon atoms,
- R⁴ represents an alkyl group comprising 1-2 carbon atoms or an ω-oxaalkyl alkyl group comprising 2-10 carbon atoms, preferably a methyl group
- z is 0 or 1.
- n = 1, 2 or 3
- X represents the OH or NCO reactive group.

## Patentansprüche

1. Ein Verfahren zur Herstellung einer einen Einkomponentenschaum bildenden Zusammensetzung, welche zumindest eine organische Präpolymerzusammensetzung enthält, um bei Extrusion der Schaum bildenden Zusammensetzung aus einem Druckbehälter einen flammwidrigen Schaum herzustellen, **dadurch gekennzeichnet, dass** die Präpolymerzusammensetzung und von 0,5 bis 30 Gew.-% Blähgraphit in Bezug zum Gewicht des Präpolymers in den Behälter eingegeben werden, wonach der Behälter versiegelt und durch Einspritzen von zumindest einem Teil des unter Druck gesetzten Treibmittels in den geschlossenen Behälter unter Druck gesetzt wird und der Inhalt des Behälters Bewegung ausgesetzt wird, um das Mischen der Präpolymerzusammensetzung, des Blähgraphits und des Treibmittels zu verursachen, wobei die Präpolymerzusammensetzung zumindest teilweise präpolymerisiert wird, wenn der Blähgraphit zugesetzt wird, und wobei die organische Präpolymerzusammensetzung ein Präpolymer enthält, das ein NCO- oder ein silanterminiertes Präpolymer ist, und wobei das Präpolymer einen Isocyanat-Monomer-Gehalt von weniger als 3 Gew.-% in Bezug um Gesamtgewicht des Präpolymers hat.

2. Ein Verfahren nach Anspruch 1, **dadurch gekennzeichnet, dass** die Präpolymerzusammensetzung und der Blähgraphit als eine Vormischung in den Behälter eingegeben werden.

3. Ein Verfahren nach Anspruch 1, **dadurch gekennzeichnet, dass** die Präpolymerzusammensetzung und der Blähgraphit als getrennte Komponenten in den Behälter eingegeben und in situ im Behälter gemischt werden.

4. Ein Verfahren nach Anspruch 1, **dadurch gekennzeichnet, dass** das silanterminierte Präpolymer durch Reaktion eines NCOterminierten Präpolymers mit einem Aminosilan, bevorzugt einem α-Alkoxy-Aminosilan, hergestellt wird.

5. Ein Verfahren nach Anspruch 1, **dadurch gekennzeichnet, dass** das silanterminierte Präpolymer in einem einstufigen Verfahren durch Reaktion einer Verbindung mit funktionalen OH-Gruppen, ausgewählt aus der Gruppe bestehend aus einem Polyether-Polyol, einem Polyester-Polyol oder einer Mischung davon hergestellt wird, wobei zumindest ein Teil der funktionalen OH-Gruppen der Hauptkette mit einem Isocyanat-Alkoxysilan reagieren, bevorzugt einem α-Alkoxysilan.

6. Ein Verfahren nach Anspruch 4 oder 5, **dadurch gekennzeichnet, dass** als ein Alkoxysilan ein Silan verwendet wird, das der allgemeinen Formel X-(CH₂)ₙ -SiR³_{z}(OR⁴)_{3-z} entspricht, wobei
- R³ für eine Alkyl-, Cycloalkyl-, Alkenyl- oder Arylgruppe steht, die 1 bis 10 Kohlenstoffatome umfasst,
- R⁴ für eine Alkylgruppe steht, die 1 bis 2 Kohlenstoffatome oder eine ω-Oxaalkyl-Alkylgruppe mit 2 bis 10 Kohlenstoffatomen umfasst, bevorzugt eine Methylgruppe
- z 0 oder 1 ist
- n 1, 2 oder 3 ist
- X für die OH- oder NCO-reaktive Gruppe steht.

## Revendications

1. Procédé de production d'une composition de formation de mousse à un composant qui contient au moins une composition de prépolymère organique pour produire une mousse coupe-feu lors de l'extrusion de la composition de formation de mousse à partir d'un contenant pressurisé, **caractérisé en ce que** la composition de prépolymère et de 0,5 à 30 % en poids de graphite expansible par rapport au poids du prépolymère sont fournis au contenant, après quoi le contenant est obturé et pressurisé par injection d'au moins une partie de l'agent propulseur pressurisé dans le contenant fermé et les contenus du contenant sont soumis à un mouvement pour provoquer le mélange de la composition de prépolymère, du graphite expansible et de l'agent propulseur, dans lequel la composition de prépolymère est au moins partiellement prépolymérisée lorsque le graphite expansible est ajouté et dans lequel la composition de prépolymère organique contient un prépolymère qui est un prépolymère terminé par NCO ou silane et dans lequel le prépolymère a une teneur en monomère d'isocyanate de moins de 3 % en poids par rapport au poids total du prépolymère.

2. Procédé selon la revendication 1, **caractérisé en ce que** la composition de prépolymère et le graphite expansible sont fournis au contenant sous forme de pré-mélange.

3. Procédé selon la revendication 1, **caractérisé en ce que** la composition de prépolymère et le graphite expansible sont fournis sous forme de composants séparés au contenant et mélangés *in situ* dans le contenant.

4. Procédé selon la revendication 1, **caractérisé en ce que** le prépolymère terminé par silane est produit par réaction d'un prépolymère terminé par NCO avec un aminosilane, de préférence un alpha alcoxy aminosilane.

5. Procédé selon la revendication 1, **caractérisé en ce que** le prépolymère terminé par silane est produit dans un processus à une étape par réaction d'un composé avec des groupes OH fonctionnels choisis dans le groupe d'un polyéther polyol, d'un polyester polyol ou de l'un de leur mélange, dans lequel au moins une partie des groupes OH fonctionnels de la chaîne principale réagit avec un isocyanato-alcoxysilane, de préférence un alpha alcoxy silane.

6. Procédé selon la revendication 4 ou 5, **caractérisé en ce que** à titre d'alcoxysilane, on utilise un silane qui répond à la formule générale X-(CH₂)ₙ-SiR³_{z}(OR⁴)_{3-z} dans laquelle
- R³ représente un groupe alkyle, cycloalkyle, alcényle ou aryle comprenant 1 à 10 atomes de carbone,
- R⁴ représente un groupe alkyle comprenant 1 à 2 atomes de carbone ou un groupe ω-oxaalkyl alkyle comprenant 2 à 10 atomes de carbone, de préférence un groupe méthyle
- z vaut 0 ou 1.
- n = 1, 2 ou 3
- X représente le groupe réactif OH ou NCO.
